# EUROPEAN PATENT APPLICATION

(11) **EP 3 726 632 A1**
(43) Date of publication of application: **21.10.2020**
(21) Application number: 18889437.2
(22) Date of filing: 14.12.2018
(51) Int. Cl.: H01M 8/18, H01M 8/04, H01M 8/04186

(54) **BATTERY BODY UNIT FOR REDOX FLOW BATTERY, REDOX FLOW BATTERY USING SAME, AND METHOD FOR OPERATING REDOX FLOW BATTERY**

(30) Priority: 14.12.2017 JP 2017239459; 25.12.2017 JP 2017247533
(71) Applicant: Showa Denko K.K., Tokyo 105-8518 (JP)
(72) Inventor: KOYAMA Tamami, Tokyo 105-8518 (JP); SUZUKI Masahiro, Tokyo 105-8518 (JP); ZHOU Tingting, Tokyo 105-8518 (JP); TOMITA Miyuki, Tokyo 105-8518 (JP)
(74) Representative: Strehl Schübel-Hopf & Partner
(86) International application number: PCT/JP2018/046203
(87) International publication number: WO 2019/117308

(57) **Abstract**

This battery body unit 10 for a redox flow battery performs charging and discharging by circulating an electrolyte in which active materials are dissolved to a battery cell 3 comprising electrodes 1 containing nanomaterials, an ion exchange membrane 2, and bipolar plates. The battery body unit 10 for the redox flow battery comprises an outer frame body 4, and the following which are installed inside the outer frame body 4: the battery cell 3; inner pipes (internal electrolyte going-way pipe 5, internal electrolyte returning-way pipe 6) that circulate the electrolyte to the battery cell 4; and electrolyte exchange members 7 forming a portion of the path of the inner pipes. The electrolyte exchange member 7 has a connection part 7a that connects to an external electrolyte going-way pipe 12 and a connection part 7b that connects to an external electrolyte returning-way pipe 13. The connection part 7b that connects to the external electrolyte returning-way pipe 13 is provided with a filter member 8 that does not allow nanomaterials to pass through, thus establishing a sealed system for the nanomaterials that prevents the nanomaterials from flowing out of the battery body unit 10.

## Description

### TECHNICAL FIELD

The present invention relates to a battery body unit of a redox flow battery comprising electrodes containing nanomaterials, the redox flow battery and a method of operating the redox flow battery.

### BACKGROUND ART

As an electric power storage battery, development of various batteries has been in progress, and examples thereof include an electrolyte circulation type battery, a so-called redox flow battery. It is, however, known that in redox flow batteries, electrodes comprising a nanomaterial having a nanometer order size such as a carbon nanotube are used to increase surface areas of the electrodes to obtain high power output (see, for example, Patent Document 1).

However, control of these nanomaterials has been strengthened from a safety standpoint, as is set forth in Non-Patent Document 1 promulgated by the U.S. Environmental Protection Agency (EPA) on May 16, 2016. Therefore, even when a situation such that an electrolyte leaks from a redox flow battery cell or a circulation path (pipes and an electrolyte tank) occurs, it is required that nanomaterial will not flow out to the outside.

Patent Document 1: Japanese Unexamined Patent Application (Translation of PCT Application), Publication No. 2014-530476

Non-Patent Document 1: Significant New Use Rules: SNUR, promulgated on May 16, 2016

### DISCLOSURE OF THE INVENTION

### Problems to be Solved by the Invention

The present invention has been proposed in view of such circumstances, and an object of the present invention is to provide a battery body unit of a redox flow battery, with the battery body unit being capable of preventing a nanomaterial from flowing out of the battery body unit, the redox flow battery using the same, and a method for operating the redox flow battery.

### Means for Solving the Problems

The present inventors have intensively studied in order to solve the above-mentioned problems. As a result, it has been found that it is possible to completely prevent a nanomaterial from flowing out to the outside of the battery body unit, by providing an electrolyte exchange member in a part of an inner pipe of the battery body unit, so that the battery body unit is configured to allow the electrolyte to be replaced through the external electrolyte tank via the electrolyte exchange member, and further installing a filtering unit that does not allow nanoparticles to pass through in the electrolyte exchange member, so that the nanomaterial does not flow out from the electrolyte exchange member to the outside together with the electrolyte. This finding has led to the completion of the present invention.

A first aspect of the present invention is a battery body unit of a redox flow battery that performs charge and discharge by circulating an electrolyte containing active materials to a battery cell comprising electrodes containing nanomaterials, an ion-exchange membrane and bipolar plates, in which the battery body unit comprises an outer frame body, the battery cell installed inside the outer frame body, an inner pipe for circulating the electrolyte to the battery cell and an electrolyte exchange member that forms a part of a path in the inner pipe, in which the electrolyte exchange member comprises a connecting portion to an external electrolyte going-way pipe and a connecting portion to an external electrolyte returning-way pipe, in which the connecting portion to the external electrolyte returning-way pipe comprises a filter member that does not allow the nanomaterial to pass through, in which the connecting portion to the external electrolyte going-way pipe comprises a filter member that does not allow the nanomaterials to pass through or a check valve, and in which the electrolyte exchange member forms a closed system so that the nanomaterials do not leak outside.

A second aspect of the present invention is a battery body unit of a redox flow battery that performs charge and discharge by circulating an electrolyte containing active materials to a battery cell comprising electrodes containing nanomaterials, an ion-exchange membrane and bipolar plates, in which the battery body unit comprises an outer frame body, the battery cell installed inside the outer frame body, an inner pipe for circulating the electrolyte to the battery cell and an electrolyte exchange member that forms a part of a path in the inner pipe, in which the electrolyte exchange member is separated into a hollow space and an outer space by a filter member having a hollow fiber structure that does not allow the nanomaterial to pass through, and the electrolyte exchange member has a connecting portion to an external electrolyte going-way pipe and a connecting portion to an external electrolyte returning-way pipe, in the outer space, and in which the hollow space is connected to the inner pipe.

A third aspect of the present invention is a battery body unit of a redox flow battery that performs charge and discharge by circulating an electrolyte containing active materials to a battery cell comprising an electrode containing nanomaterials, an ion-exchange membrane and bipolar plates, in which the battery body unit comprises an outer frame body, the battery cell installed inside the outer frame body, an inner pipe for circulating the electrolyte to the battery cell and an electrolyte exchange member that forms a part of a path in the inner pipe, in which the electrolyte exchange member is separated into a hollow space and an outer space by a filter member having a hollow fiber structure that does not allow the nanomaterial to pass through, and the electrolyte exchange member has a connecting portion to an external electrolyte going-way pipe and a connecting portion to an external electrolyte returning-way pipe, in the outer space, and in which the hollow space is connected to the inner pipe and the outer space is partitioned into two space portions: an outer space portion closer to an inlet for the electrolyte and an outer space portion closer to an outlet for the electrolyte, and the outer space has a connecting portion to the external electrolyte going-way pipe in the outer space portion closer to the inlet and a connecting portion to the external electrolyte returning-way pipe in the outer space portion closer to the outlet.

A fourth aspect of the present invention is the battery body unit of a redox flow battery as described in the third aspect, in which the outer space portion closer to the inlet is not separated by the filter member, but comprises a check valve in the connecting portion to the external electrolyte going-way pipe.

A fifth aspect of the present invention is the battery body unit of a redox flow battery as described in any one of the first to fourth aspects, in which the electrolyte exchange member comprises the connecting portion to the external electrolyte going-way pipe and the connecting portion to the external electrolyte returning-way pipe on a side surface of the electrolyte exchange member.

A sixth aspect of the present invention is the battery body unit of a redox flow battery as described in any one of the first to fifth aspects, in which the battery body unit is configured to be detachable from the redox flow battery and replaceable.

A seventh aspect of the present invention is the battery body unit of a redox flow battery as described in any one of the first to sixth aspects, in which the outer frame body, the battery cell, the inner pipe, and the electrolyte exchange member are formed as an integral structure.

An eighth aspect of the present invention is the battery body unit of a redox flow battery as described in any one of the first to seventh aspects, in which the inner pipe is formed in the outer frame body.

A ninth aspect of the present invention is the battery body unit of a redox flow battery as described in any one of the first to eighth aspects, in which the nanomaterials are carbon nanomaterials.

A tenth aspect of the present invention is a redox flow battery, configured by comprising the battery body unit as described in any one of the first to ninth aspects, an electrolyte tank, the external electrolyte going-way pipe and the external electrolyte returning-way pipe.

An eleventh aspect of the present invention is a method of operation of a redox flow battery having an electrode comprising a nanomaterial in a battery cell, the method includes a step of monitoring a content of the nanomaterials detached from the electrode in an electrolyte under circulation.

A twelfth aspect of the present invention may include a step of stopping operation of the redox flow battery, when nanomaterials in a content greater than or equal to a preset content are detected in the electrolyte.

A thirteenth aspect of the present invention may include a step of replacing the battery cell with a new battery cell, when the operation is stopped.

A fourteenth aspect of the present invention may further include a step of filtering the electrolyte in which the nanomaterials in a content greater than or equal to the preset content are detected.

A fifteenth aspect of the present invention may include a step of exchanging the electrolyte in which the nanomaterials in a content greater than or equal to the preset content are detected. A sixteenth aspect of the present invention may be applied to the battery body unit of a redox flow battery as described in any one of the first to ninth aspects or the redox flow battery as described in the tenth aspect.

### Effects of the Invention

The present invention can provide a battery body unit of a redox flow battery, in which the battery body unit is capable of preventing flow out (or increase in an amount) of a nanomaterial from the redox flow battery into an electrolyte which is circulated to a battery cell, with the flow out of nanomaterials being due to detachment of the nanomaterial from the electrode , and can provide the redox flow battery using the battery body unit and a method for operating the redox flow battery.

### BRIEF DESCRIPTION OF THE DRAWINGS

FIG. 1 is a configuration diagram showing an example of a configuration of a battery body unit of a redox flow battery according to the present embodiment and the redox flow battery;
FIG. 2 is a configuration diagram showing a configuration of a main part of the redox flow battery according to the first embodiment;
FIG. 3 is a configuration diagram showing a configuration of a main part of the redox flow battery according to the second embodiment; and
FIG. 4 is a configuration diagram showing a configuration of a main part of the redox flow battery according to the third embodiment.

### PREFERRED MODE FOR CARRYING OUT THE INVENTION

Embodiments of the battery body unit of a redox flow battery and the redox flow battery to which the present invention is applied are explained in detail below. Note that the present invention is not limited to the aspects below, but different variations are possible within a scope in which the gist of the present invention is not changed.

### <First Aspect>

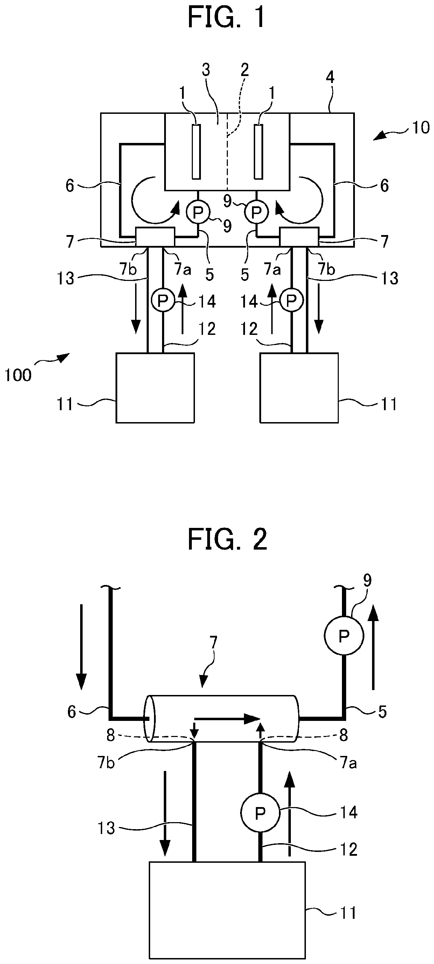

FIG. 1 is a configuration diagram showing an example of a configuration of the battery body unit of the redox flow battery according to the present embodiment and the redox flow battery. FIG. 2 is a configuration diagram showing a configuration of a main part of the redox flow battery according to the first embodiment. As shown in FIG. 1, according to the present embodiment, a battery body unit 10 of the redox flow battery includes a battery cell 3 including electrodes 1 containing nanomaterials, an ion-exchange membrane 2, and bipolar plates (not shown), and performs charge and discharge by circulating an electrolyte containing active materials in the battery cell 3. Additionally, the battery cell 3, inner pipes (internal electrolyte going-way pipe 5 and internal electrolyte returning-way pipe 6) for circulating an electrolyte to the battery cell 3, and an electrolyte exchange member 7 constituting a part of a path of the inner pipe are installed in an outer frame body 4.

As shown in FIG. 1, a redox flow battery 100 according to the present embodiment includes a battery body unit 10, an electrolyte tank 11 for accommodating an electrolyte to be circulated in the battery body unit 10, and external pipes (external electrolyte going-way pipe 12 and external electrolyte returning-way pipe 13) for connecting the battery body unit 10 and the electrolyte tank 11. A set of the electrolyte tank 11, the external pipes (external electrolyte going-way pipe 12 and external electrolyte returning-way pipe 13) and the like is provided for each of a positive electrode and a negative electrode, and the following explanation applies to both of them.

In the battery body unit 10 of the above configuration, operation of a liquid feeding pump 9 circulates the electrolyte through the internal electrolyte going-way pipe 5, the battery cell 3, the internal electrolyte returning-way pipe 6, and an electrolyte exchange member 7 to be described below. On the other hand, the electrolyte in the electrolyte tank 11 is fed to the battery body unit 10 through the external electrolyte going-way pipe 12 by activating a liquid feeding pump 14, and is returned to electrolyte tank 11 via the external electrolyte returning-way pipe 13, so that the electrolyte in the battery body unit 10 is renewed. In this manner, in the redox flow battery 100, charge and discharge reactions are performed in the battery cell 3 while circulating an electrolyte containing active materials, so that electric power is drawn out or stored. Arrows in the drawings indicate a moving direction of electrolyte.

In order to smoothly and efficiently exchange the electrolyte, two liquid feeding pumps, i.e., a liquid feeding pump 9 and a liquid feeding pump 14, are installed for inner circulation and external circulation, respectively. Here, the liquid feeding pump 9 for inner circulation may be installed in the internal electrolyte returning-way pipe 6, but installation of a liquid feeding pump in the return path results in reduced pressure in the battery cell 3, this resulting in easy generation of air bubbles. Moreover, installation of a liquid feeding pump in the supply path allows the liquid to be more efficiently and more stably fed, so that it is preferable to install the liquid feeding pump 9 in the internal electrolyte going-way pipe 5. A liquid feeding pump 14 for external circulation may also be installed in the external electrolyte returning-way pipe 13, but for similar reasons, it is preferable to install the liquid feeding pump for external circulation in the external electrolyte going-way pipe 12.

Further, in the battery body unit 10 shown in FIG. 1, the battery cell 3 is singly installed, but the battery cell 3 is typically used in a form called a battery cell stack in which two or more battery cells 3 are stacked together, the battery cell 3 being the minimum unit.

By the way, the nanomaterial contained in the electrode 1 include, for example, a carbon, a metal, an oxide, or the like, and at least one dimension of three dimensions of them has a size of 1 nm to 1,000 nm. Thus, the nanomaterial formed of them is sometimes referred to as a carbon nanomaterial, a metal nanomaterial, or an oxide nanomaterial, respectively. Among them, electrodes containing carbon nanomaterials are preferably used from the viewpoint of obtaining high current density. Examples of the carbon nanomaterial include carbon nanotubes, carbon nanofibers, carbon nanoparticles, carbon nanowhiskers, carbon nanorods, carbon nanofilaments, carbon nanocoils, and graphene. Among them, carbon nanotubes are more preferred in that good battery properties can be obtained.

These nanometer-sized nanomaterials may become detached from the electrode as the electrolyte circulates during charging and discharging, and may be circulated while being suspended in the electrolyte. Although these nanomaterials do not cause any problems when they remain in the battery body unit 10, there is a possibility that nanomaterials suspended in an electrolyte leak to the outside, particularly when the electrolyte leaks from the pipe for returning the electrolyte from a battery body unit to an electrolyte tank. However, even when such an abnormal situation occurs as described above, it is a requirement that a nanomaterial should not leak to the outside, and strengthening the control thereof from the viewpoint of safety is required.

Given the above, in the battery body unit 10 according to the present embodiment, inner pipes (internal electrolyte going-way pipe 5 and internal electrolyte returning-way pipe 6) and an electrolyte exchange member 7 constituting a part of a path in the inner pipes are installed in the outer frame body 4.

As shown in FIG. 2, the electrolyte exchange member 7 has a connecting portion 7a to the external electrolyte going-way pipe 12 and a connecting portion 7b to the external electrolyte returning-way pipe 13, and is characterized by comprising, in each of the connecting portions 7a and 7b, a filter member 8 which does not allow the nanomaterials to pass through, so as to form a closed system so that the nanomaterials do not leak outside.

In the redox flow battery 100 of the above configuration, when an electrolyte containing nanomaterials detached from electrodes 1 circulates in the battery body unit 10, even if abnormalities such as backflow or electrolyte leakage occur, the detached nanomaterials remain in the unit 10 due to the filter member 8 and does not flow out to the outside.

In addition, a check valve may be installed instead of the filter member 8 in connecting portion 7a in order to prevent a nanomaterial from leaking out of the battery body unit 10 due to backflow, without obstructing the flow of the electrolyte as much as possible. A check valve can prevent an electrolyte containing a nanomaterial from leaking from the connecting portion 7a due to backflow, without obstructing the flow of the electrolyte moving from the external electrolyte going-way pipe 12 toward the electrolyte exchange member 7.

Incidentally, when the filter member 8 is provided in the connecting portion 7b of the electrolyte exchange member 7, if a nanomaterial or a precipitate of the electrolyte is clogged in the filter member 8, pressure loss increases as the electrolyte passes through the filter member 8, and this results in difficulty in smooth circulation of the electrolyte between the battery cell 3 and the electrolyte tank 11 in some cases. Therefore, the electrolyte exchange member 7 may be configured to be divided into two spaces by a filter member, as described below.

### <Second Embodiment>

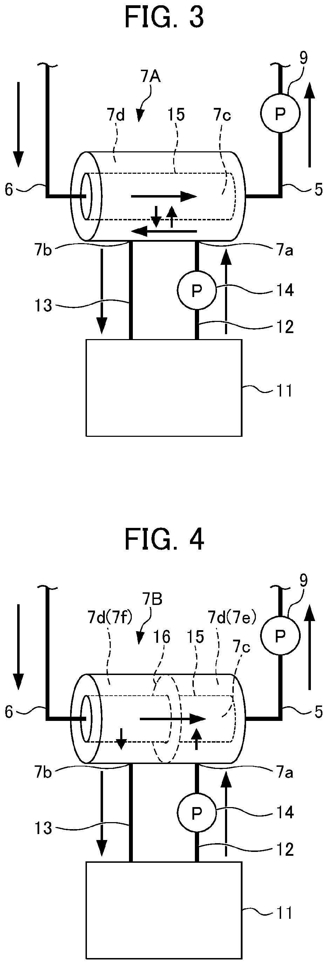

Hereinafter, the battery body unit and the redox flow battery according to the second embodiment are described in detail. FIG. 3 is a configuration diagram showing a configuration of a main part of the redox flow battery according to the second embodiment. Following is an explanation of characteristic parts different from the first embodiment. Identical signs are attached to members that are the same as the members described above in the drawings, and descriptions thereof are omitted.

The electrolyte exchange member 7A according to the second embodiment has two spaces separated by a filter member 15 of a nanomaterial-impermeable hollow system structure. Specifically, the electrolyte exchange member 7A has a hollow space 7c and an outer space 7d which are separated by the filter member 15 of a hollow fiber structure, as shown in FIG. 3. The hollow space 7c is connected to inner pipes (internal electrolyte going-way pipe 5 and internal electrolyte returning-way pipe 6) to form a part of the path of the inner pipes, and the outer space 7d has a connecting portion 7a to the external electrolyte going-way pipe 12 and a connecting portion 7b to the external electrolyte returning-way pipe 13.

In the battery body unit 10 of the above configuration, operation of the liquid feeding pump 9 circulates the electrolyte through the internal electrolyte going-way pipe 5, the battery cell 3, the internal electrolyte returning-way pipe 6, and the hollow space 7c. On the other hand, operation of a liquid feeding pump 14 circulates an electrolyte in the electrolyte tank 11 through the external electrolyte going-way pipe 12, the outer space 7d, and the external electrolyte returning-way pipe 13. Additionally, in the electrolyte exchange member 7A, the electrolyte is appropriately replaced between the hollow space 7c and the outer space 7d. At this time, even if nanomaterials are contained in an electrolyte returned to the hollow space 7c from the battery cell 3 via the internal electrolyte returning-way pipe 6, this nanomaterial cannot move from a side of the hollow space 7c to a side of the outer space 7d due to the film member 15, and is circulated while being retained in the hollow space 7c, so as to form a closed system so that the nanomaterials do not leak outside.

In the electrolyte exchange member 7A configured as described above, active materials are spontaneously replaced through equilibrium reactions via the filter member 15 between the electrolyte circulating through the internal electrolyte going-way pipe 5, the battery cell 3, the internal electrolyte returning-way pipe 6 and the hollow space 7c, and the electrolyte circulating through the electrolyte tank 11, the external electrolyte going-way pipe 12, the outer space 7d and the external electrolyte returning-way pipe 13. In other words, since the present method does not forcibly feed an electrolyte into the filter member 15 using the liquid feeding pump 14 to filter the nanomaterial, clogging due to nanomaterials hardly occurs as compared to a case of the filter member 8. Therefore, the electrolyte exchange member 7A can be used without replacement for a long period of time.

### <Third Embodiment>

Below, the battery body unit according to the third embodiment and the redox flow battery are described in detail. FIG. 4 is a configuration diagram showing a configuration of a main part of the redox flow battery according to the third embodiment.

The electrolyte exchange member 7B according to the third embodiment comprises a hollow space 7c and an outer space 7d, with the hollow space 7c and the outer space 7d being separated by a filter member 15, and the outer space 7d is partitioned by a partition plate 16 into two space portions: an outer space portion 7e closer to the inlet for the electrolyte and an outer space portion 7f closer to the outlet for the electrolyte. The outer space portion 7e closer to the inlet has a connecting portion 7a to the external electrolyte going-way pipe 12 and the outer space portion 7f closer to the outlet has a connecting portion 7b to the external electrolyte returning-way pipe 13.

In the third embodiment, since the outer space 7d is partitioned into two space portions (outer space portion 7e closer to the inlet and outer space portion 7f closer to the outlet) by a partition plate 16, unlike in the second embodiment, an electrolyte supplied from the electrolyte tank 11 to the outer space portion 7e closer to the inlet does not directly move to the outer space portion 7f closer to the outlet. The configuration including such a partition plate 16 is preferable because it is possible to construct a system in which an electrolyte is circulated while filtering a nanomaterial by filter member 15 using differential pressure between the hollow space 7c and the outer space 7d. That is, as in the first embodiment, since an electrolyte is fed into inner pipes by the liquid feeding pump 14, the electrolyte can be efficiently circulated. Since an area of a filter member substantially increases as compared to the first embodiment, clogging due to the nanomaterial can be improved significantly.

The electrolyte exchange member 7B according to the third embodiment is divided into two space portions: the outer space portion 7e closer to the inlet for the electrolyte and the outer space portion 7f closer to the outlet, by the partition plate 16, and both the space portions are isolated from the hollow space by the filter member 15. The electrolyte exchange member 7B according to the third embodiment may be configured so that only the outer space portion closer to the outlet is isolated from the hollow space by the filter member 15. In this case, the outer space portion closer to the inlet is not isolated from the hollow space by the filter member 15, and the connecting portion 7a is preferably provided with a check valve so that the electrolyte containing nanomaterials does not leak to the outside, out of the connecting portion 7a due to backflow. As described in the first embodiment, a check valve can prevent an electrolyte containing nanomaterials from leaking from the connecting portion 7a due to backflow, without obstructing the flow of the electrolyte moving from the external electrolyte going-way pipe 12 toward the electrolyte exchange member 7B.

With regard to filter members 8 and 15 provided in the battery body unit 10 according to the first to third embodiments, any filter material that allows permeation of active materials dissolved in the electrolyte or a solvent but is not permeable to nanomaterials insoluble in the electrolyte can be used without limitation. Mesh size of the filter members 8 and 15 may be appropriately selected depending on the size of the nanomaterial included in the electrode 1.

It is preferable that electrolyte exchange members 7, 7A and 7B (hereinafter simply referred to as " electrolyte exchange member 7") have a connecting portion 7a to the external electrolyte going-way pipe 12 and a connecting portion 7b to the external electrolyte returning-way pipe 13 on a side surface of the electrolyte exchange member. Providing connecting portions 7a and 7b on the side surface of the electrolyte exchange member 7 enables the electrolyte exchange member 7 to be accommodated in the outer frame body 4, and the external electrolyte going-way pipe 12 and the external electrolyte returning-way pipe 13 can be formed separately, so as to easily establish a system closed from the outside with regard to the nanomaterial.

Since precipitates precipitated from a nanomaterial or an electrolyte may adhere to the filter members 8 and 15, the battery body unit may be configured to be easily dismountable from the redox flow battery and be replaceable, thereby improving the maintainability. In addition, replacing a battery body unit itself can eliminate the possibility of nanomaterials leaking to the outside due to maintenance or the like.

Further, in order to form a closed system so that the nanomaterials do not leak outside, it is preferable to form the outer frame body 4, the battery cell 3, the inner pipes (internal electrolyte going-way pipe 5 and internal electrolyte returning-way pipe 6) and the electrolyte exchange member 7 as an integrally formed structure. Specifically, for example, a battery cell 3, inner pipes (internal electrolyte going-way pipe 5 and internal electrolyte returning-way pipe 6), and an electrolyte exchange member 7 may be incorporated into a box-like outer frame body 4, which has a strong structure made of carbon materials, ceramics, metals, or the like, to form an integral structure. As a result, even if leakage occurs from the battery cell and the inner pipes, the electrolyte can be reliably prevented from flowing out of the outer frame body 4. In addition, forming the battery body unit as an integral structure achieves easy replacement of the battery body unit.

Further, in order to form a closed system so that the nanomaterials do not leak outside, the inner pipe may be formed in the outer frame body 4. Specifically, a space corresponding to the inner pipe may be formed in the outer frame body 4. As a result, damage or the like is less likely to occur in the inner pipe, and an electrolyte can be reliably prevented from flowing out of the outer frame body 4.

### <Fourth Embodiment>

Subsequently, as the fourth embodiment, an operation method of the redox flow battery is described in detail, but the present invention is not limited to this, and can be practiced by appropriately changing the operation within the scope of the effects of the present invention.

Generally, a redox flow battery has electrodes (a positive electrode and a negative electrode) and a membrane in one battery cell, and a positive electrode electrolyte is supplied to the positive electrode, a negative electrode electrolyte is supplied to the negative electrode, and thereby charge and discharge is performed. In general, a plurality of such cells is stacked in many cases. A nanomaterial is used for the electrodes because it is easy to obtain a high specific surface area, resulting in obtainment of high current density. As the membrane, an ion-exchange membrane such as Nafion (registered trademark) is preferably used. A sulfuric acid solution containing vanadium ions is often used as an electrolyte.

The present embodiment is a method for operating a redox flow battery having an electrode comprising a nanomaterial in the battery cell, the method comprising a step of monitoring a content of the nanomaterial in an electrolyte circulating to the electrode.

The nanomaterial, which normally remains in the electrode, disperses into the electrolyte when it leaks out of the electrode for some reason, such as damage to the electrode. Therefore, the monitoring step is preferably performed periodically by analyzing the nanomaterial in the electrolyte. Intervals between the analyses may be set to one month, one week, one day, or the like in general, depending on the characteristics of the electrode, such as tendency of the nanomaterial to leak out. If suspecting a leakage of nanomaterials, it may be analyzed at shorter intervals, e.g., every one hour.

Examples of the analytical method which is relatively independent of the type of the nanomaterial include a method in which an electrolyte is filtered and filtered residue is observed by electron-microscopy to confirm presence or absence of a nanomaterial or a fragment thereof. More specifically, for example, 1 L of an electrolyte is filtered through a membrane filter having a pore diameter of 0.05 µm and a diameter of 2 cm, and an area of 1 µm square is observed on the filter by scanning electron microscopy at a magnification of 100,000 at 10 places to confirm presence or absence of a nanomaterial or a fragment thereof. The content may be assessed by the total number of nanomaterials and fragments observed at the 10 places. In addition to the above analytical method, it is preferable to employ a more sensitive analytical method suited to the type of nanomaterial so that even slight leakage can be detected.

When the analytical value is equal to or more than a preset content of a nanomaterial in an electrolyte, it is determined that the nanomaterial is detected. The preset content value is preferably set to be as small as possible and significantly higher than the analysis value (analysis value of the background) of the normal state (state in which no nanomaterial leaks).

The present embodiment may include a step of stopping the operation of a redox flow battery when nanomaterials in a content greater than or equal to the preset content are detected in the electrolyte. Stopping the operation prevents the nanomaterials from further leaking out into the electrolyte.

When the operation is stopped, the present embodiment preferably includes a step of replacing the battery cell with a new battery cell. When the battery cells are stacked, it is more preferable to avoid disassembling the stacked cells and replace the stacked cells together in order to reduce the risks of scattering nanomaterials. Further, when replacing it, it is more preferable to perform by sealing the inlet to and outlet from the cell in order to prevent slight leakage or splashing of the electrolyte.

As an electrode of a redox flow battery, carbon paper or the like which may serve as a nanomaterial filtering material may be used. In such a case, an electrolyte in which nanomaterials are detected may be continuously used after the replacement of the cell. However, in order to more reliably prevent leakage or splashing of the nanomaterial, it is preferable to filter the electrolyte in which a nanomaterial is detected in order to remove the nanomaterial from the electrolyte or to replace the electrolyte with fresh electrolyte.

The redox flow battery operating method of the fourth embodiment can be applied to the battery body units and the redox flow batteries as described in the first to third embodiments. This further ensures that leakage of a nanomaterial, in particular to the outside of battery body unit, can be effectively prevented.

### EXPLANATION OF REFERENCE NUMERALS

- 1: Electrode
- 2: Ion exchange membrane
- 3: Battery cell
- 4: Outer frame body
- 5: Inner pipe (internal electrolyte going-way pipe)
- 6: Inner pipe (internal electrolyte returning-way pipe)
- 7, 7A, 7B: Electrolyte exchange member
- 8: Filter member
- 9: Liquid feeding pump
- 10: Battery body unit
- 11: Electrolyte tank
- 12: External electrolyte going-way pipe
- 13: External electrolyte returning-way pipe
- 14: Liquid feeding pump
- 15: Filter member
- 16: Partition plate
- 7a: Connecting portion to external electrolyte going-way pipe
- of: electrolyte exchange member
- 7b: Connecting portion to external electrolyte returning-way pipe of electrolyte exchange member
- 7c: Hollow space
- 7d: Outer space
- 7e: Outer space portion closer to the inlet
- 7f: Outer space portion closer to the outlet

## Claims

1. A battery body unit of a redox flow battery that performs charge and discharge by circulating an electrolyte containing active materials to a battery cell comprising electrodes containing nanomaterials, an ion-exchange membrane and bipolar plates, with the battery body unit comprising an outer frame body, the battery cell installed inside the outer frame body, an inner pipe for circulating the electrolyte to the battery cell and an electrolyte exchange member that forms a part of a path in the inner pipe,
wherein the electrolyte exchange member comprises a connecting portion to an external electrolyte going-way pipe and a connecting portion to an external electrolyte returning-way pipe,
wherein the connecting portion to the external electrolyte returning-way pipe comprises a filter member that does not allow the nanomaterial to pass through,
wherein the connecting portion to the external electrolyte going-way pipe comprises a filter member that does not allow the nanomaterial to pass through or a check valve, and
wherein the electrolyte exchange member forms a closed system so that the nanomaterials do not leak outside.

2. A battery body unit of a redox flow battery that performs charge and discharge by circulating an electrolyte containing active materials to a battery cell comprising electrodes containing nanomaterials, an ion-exchange membrane and bipolar plates, with the battery body unit comprising an outer frame body, the battery cell installed inside the outer frame body, an inner pipe for circulating the electrolyte to the battery cell and an electrolyte exchange member that forms a part of a path in the inner pipe,
wherein the electrolyte exchange member is separated into a hollow space and an outer space by a filter member having a hollow fiber structure that does not allow the nanomaterials to pass through, and the electrolyte exchange member has a connecting portion to an external electrolyte going-way pipe and a connecting portion to an external electrolyte returning-way pipe, in the outer space, and
wherein the hollow space is connected to the inner pipe.

3. A battery body unit of a redox flow battery that performs charge and discharge by circulating an electrolyte containing active materials to a battery cell comprising electrodes containing a nanomaterial, an ion-exchange membrane and bipolar plates, with the battery body unit comprising an outer frame body, the battery cell installed inside the outer frame body, an inner pipe for circulating the electrolyte to the battery cell and an electrolyte exchange member that forms a part of a path in the inner pipe,
wherein the electrolyte exchange member is separated into a hollow space and an outer space by a filter member having a hollow fiber structure that does not allow the nanomaterials to pass through, and the electrolyte exchange member has a connecting portion to an external electrolyte going-way pipe and a connecting portion to an external electrolyte returning-way pipe, in the outer space,
wherein the hollow space is connected to the inner pipe, and
wherein the outer space is partitioned into two space portions: an outer space portion closer to an inlet for the electrolyte and an outer space portion closer to an outlet for the electrolyte, and the outer space has a connecting portion to the external electrolyte going-way pipe in the outer space portion closer to the inlet and a connecting portion to the external electrolyte returning-way pipe in the outer space portion closer to the outlet.

4. The battery body unit of a redox flow battery according to claim 3, wherein the outer space portion closer to the inlet is not separated by the filter member, and comprises a check valve in the connecting portion to the external electrolyte going-way pipe.

5. The battery body unit of a redox flow battery according to any one of claims 1 to 4, wherein the electrolyte exchange member comprises the connecting portion to the external electrolyte going-way pipe and the connecting portion to the external electrolyte returning-way pipe on a side surface of the electrolyte exchange member.

6. The battery body unit of a redox flow battery according to any one of claims 1 to 5, wherein the battery body unit is configured to be detachable from the redox flow battery and replaceable.

7. The battery body unit of a redox flow battery according to any one of claims 1 to 6, wherein the outer frame body, the battery cell, the inner pipe and the electrolyte exchange member are formed as an integral structure.

8. The battery body unit of a redox flow battery according to any one of claims 1 to 7, wherein the inner pipe is formed in the outer frame body.

9. The battery body unit of a redox flow battery according to any one of claims 1 to 8, wherein the nanomaterials are carbon nanomaterials.

10. A redox flow battery, configured by comprising the battery body unit according to any one of claims 1 to 9, an electrolyte tank, the external electrolyte going-way pipe and the external electrolyte returning-way pipe.

11. A method of operation of a redox flow battery having electrodes each containing nanomaterials in a battery cell,
the method includes a step of monitoring a content of the nanomaterials detached from the electrodes in an electrolyte under circulation.

12. The method of operation of a redox flow battery according to claim 11, wherein the method further includes a step of stopping operation of the redox flow battery, when nanomaterials in a content greater than or equal to a preset content are detected in the electrolyte.

13. The method of operation of a redox flow battery according to claim 12, wherein the method further includes a step of replacing the battery cell with a new battery cell, when the operation is stopped.

14. The method of operation of a redox flow battery according to claim 13, wherein the method further includes a step of filtering the electrolyte in which nanomaterials in a content greater than or equal to the preset content are detected.

15. The method of operation of a redox flow battery according to claim 13, wherein the method further includes a step of exchanging the electrolyte in which the nanomaterials in a content greater than or equal to the preset content are detected.

16. The method of operation of a redox flow battery according to any one of claims 11 to 15, wherein the method is applied to the battery body unit of a redox flow battery according to any one of claims 1 to 9 or the redox flow battery according to claim 10.
